# EUROPÄISCHE PATENTSCHRIFT

(11) **EP 3 481 567 B1**
(45) Veröffentlichungstag und Bekanntmachung des Hinweises auf die Patenterteilung: **01.09.2021**
(21) Anmeldenummer: 17728796.8
(22) Anmeldetag: 31.05.2017
(51) Int. Cl.: B21J 15/32, B23P 19/00, B65G 51/02

(54) **NICHT-WEGVARIABLE ELEMENTWEICHE, HERSTELLVERFAHREN EINER SOLCHEN ELEMENTWEICHE UND ZUFÜHRVERFAHREN FÜR VERBINDUNGSELEMENTE**
NON-PATH-VARIABLE ELEMENT SWITCH, METHOD OF MANUFACTURING SUCH AN ELEMENT SWITCH AND METHOD FOR FEEDING CONNECTING ELEMENTS
DISPOSITIF D'AIGUILLAGE D'ÉLÉMENTS À COURSE CONSTANTE, MÉTHODE DE FABRICATION D'UN TEL DISPOSITIF D'AIGUILLAGE D'ÉLÉMENTS ET PROCÉDÉ D'ALIMENTATION EN ÉLÉMENTS D'ASSEMBLAGE

(30) Priorität: 12.07.2016 DE 102016112732
(43) Veröffentlichungstag der Anmeldung: 15.05.2019
(73) Patentinhaber: Böllhoff Verbindungstechnik GmbH, 33649 Bielefeld (DE)
(72) Erfinder: ZIEBART, Jan-Robert, 33824 Werther (DE); DOEDTMANN, Kilian, 49565 Bramsche (DE)
(74) Vertreter: HWP Intellectual Property
(86) Internationale Anmeldenummer: PCT/EP2017/063117
(87) Internationale Veröffentlichungsnummer: WO 2018/010888

(56) Entgegenhaltungen:
- GB-A- 954 522
- US-A- 3 823 803
- US-A- 6 070 758

## Beschreibung

### 1. Gebiet der Erfindung

Die vorliegende Erfindung betrifft eine nicht-wegvariable Elementweiche, insbesondere für Verbindungselemente, ein Zufuhrverfahren für kopfgeführte Verbindungselemente sowie ein Herstellungsverfahren für die nicht-wegvariable Elementweiche.

### 2. Hintergrund der Erfindung

In der Praxis werden durch nur eine Fügevorrichtung, beispielsweise ein Setzgerät für Stanzniete, unterschiedliche Fügeaufgaben gelöst. Entsprechend müssen dem Setzgerät unterschiedlich konfigurierte Stanzniete, beispielsweise Stanzniete aus unterschiedlichem Material oder mit unterschiedlichen Längen, gezielt zugeführt werden. Sobald das entsprechende Verbindungselement im Setzgerät vorliegt, kann das Setzgerät die entsprechende Fügestelle anfahren und dort die Verbindung herstellen. Um diese Aufgabe zu lösen, werden die Fügevorrichtungen häufig mit aufwendigen Magazinier-Vorrichtungen verbunden. In diesen Magazinen liegen dann unterschiedliche Konfigurationen von Verbindungselementen vor, die durch aufwendige Schaltungstechnik selektiv dem Setzgerät zuführbar sind.

DE 10 2005 041 534 A1 beschreibt eine grundlegende Konfiguration zur Speicherung von zwei unterschiedlichen Verbindungselementen in einem Setzgerät. Hier wird vorgeschlagen, nach Art eines Schieberegisters eine Speicherkammer vorzusehen, in der ein Verbindungselement zwischengespeichert werden kann. Da sich dieses Verbindungselement dann nicht mehr im Zufuhrkanal für ein weiteres Verbindungselement befindet, ist in einem relativ kurzen Zeitabstand hintereinander das Setzen von zwei unterschiedlichen Verbindungselementen möglich. Dieser Zwischenspeicher schaltet somit längere Zuführzeiten für ein Verbindungselement aus, die beispielsweise aufgrund der Länge des Zuführschlauchs zwischen Setzgerät und Reservoir der Verbindungselemente bedingt ist.

Während FR 2 625 696 eine Kombination von mehreren Magazinen beschreibt, die mit einem Zufuhrport verbunden sind, ist in EP 0 618 022 A1 ein Puffermagazin für eine Vielzahl unterschiedlicher Nietkonfigurationen beschrieben. Dieses Puffermagazin stellt für jede beliebige Nietkonfiguration eine Speicherröhre bereit. Darin werden die jeweils gewünschten Stanzniete oder andere Verbindungselemente lageorientiert und angepasst an den bevorstehenden Fügevorgang zwischengespeichert. Sobald ein bestimmter Füllstand des Puffermagazins unterschritten wird, erfolgt parallel zum weiteren Versorgen der Fügevorrichtung ein Wiederbefüllen des Puffermagazins. Eine derartige Anordnung sichert neben einer hohen Variabilität der zur Verfügung stehenden Verbindungselemente auch eine hohe Kapazität an Fügeelementen zur Absolvierung einer hohen Zahl von Fügevorgängen. Trotz dieser Vorteile ist das hier beschriebene Puffermagazin in seiner Konstruktion und dem Platzbedarf relativ aufwendig. Denn die einzelnen parallel zur Verfügung stehenden Röhren zur Speicherung unterschiedlicher Fügeelemente müssen automatisch einzeln anfahrbar sein. Nur eine derartige automatische Auswahl des jeweiligen Speichers für das richtige Fügeelement gewährleistet, dass auch das passende Fügeelement an das Setzgerät geliefert wird. Somit erfordert die hier beschriebene Konstruktion neben einem gewissen Platzbedarf auch die entsprechende Wartung, um einen nach Möglichkeit ununterbrochenen Betrieb des Puffermagazins zu gewährleisten.

Eine schaltungstechnisch und konstruktiv einfachere Lösung beschreibt DE 10 2009 030 103 A1. Hier wird vorgeschlagen, ein Setzgerät mit mehreren Zuführschläuchen für unterschiedliche Verbindungselemente zu verbinden. Diese Zuführschläuche enden in unmittelbarer Nachbarschaft zum Setzgerät, beispielsweise am C-Rahmen. Da alle Zuführschläuche mit der Elementweiche zum Setzgerät verbindbar sind, verschieben selektiv ansteuerbare Stellglieder das jeweils gewünschte Verbindungselement in den Zuführkanal zum Setzgerät. Aufgrund dieser einzelnen Ansteuerung der hier genutzten Nietquellen wird sichergestellt, dass nicht mehrere Verbindungselemente gleichzeitig im Zuführkanal für das Setzgerät bereitstehen. Aber auch die hier verwendete Schaltungstechnik erfordert einen gewissen Wartungsaufwand. Zudem muss ihr Gewicht berücksichtigt werden, da aufgrund der Anordnung der hier verwendeten Elementweiche diese permanent durch den Roboter gemeinsam mit dem Setzgerät zu den Fügestellen bewegt wird.

Eine Transfer- und Orientierungsvorrichtung für Muttern ist in US 3,823,803 A beschrieben. Der Mechanismus nimmt Muttern auf, die einen reduzierten Führungsabschnitt haben, der sich senkrecht zur Übertragungsachse erstreckt, und trennt und überträgt die Muttern entsprechend der Führungsposition. Der Transfermechanismus umfasst einen Einlassdurchgang, der die Muttern in zwei Steuerausrichtungen aufnimmt und führt, und zwei Auslassdurchgänge, die jeweils zum Aufnehmen und Überführen der Muttern in nur einer Steuerausrichtung in einem kontinuierlichen Fluss konfiguriert sind.

Verbesserungen bezüglich Niet-Zuführvorrichtungen sind in GB 954,522 A beschrieben. Eine Maschine zum Zuführen von Blindnieten umfasst ein Nietführungselement, das einen Schlitz zum Aufnehmen von Nietschäften enthält, und ein hin- und her-bewegbares Nietausrichtelement, das in Bezug auf das Führungselement so angeordnet ist, dass die ihm zugeführten Nieten in den Schlitz des Nietführungselements gelangen. Auf einer Ablage angeordnete Nieten werden von einem sich drehenden Regulierzylinder zu einer geneigten Schütte und drei konvergierenden Schütten zu einem Nietausrichtelement geführt, das in seiner oberen Oberfläche drei Mulden mit dreieckigem Querschnitt aufweist. In jeder Mulde befindet sich ein Schlitz, der sich durch die Tiefe des Elements erstreckt und etwas breiter ist als der Durchmesser des Nietdorns. Ein solcher Schlitz wird in Intervallen durch Löcher vergrößert, deren Durchmesser etwas größer ist als der Nietkopf. Unterhalb des Nietausrichtelements befindet sich ein Nietführungselement, das in seiner Oberfläche drei flache Nuten aufweist, eine unter jedem der Schlitze. Ein weiterer Schlitz erstreckt sich durch die Tiefe des Führungselements und hat eine Breite, die etwas größer ist als der Durchmesser der Nietdorne. Ein vergrößerter Teil jedes Schlitzes ermöglicht, dass Dorne, die sich von ihren Nieten gelöst haben, frei fallen. Das Nietausrichtelement wird durch eine Pleuelstange hin- und her-bewegt, die exzentrisch an einem Zahnrad angebracht ist, das auch den Regulierzylinder über eine Ratschen-Vorrichtung antreibt. Die Schlitze laufen in einem einzigen Schlitz zusammen, der zu einem Nietmagazin führt, das einen drehbaren Zylinder mit mehreren Schlitzen in seiner Oberfläche aufweist, die zur Aufnahme der Nietdorne ausgebildet sind.

Schließlich beschreibt US 6 070 758 A, welche als nächstliegender Stand der Technik bezüglich des Gegenstandes des Patentanspruchs 1 angesehen werden kann, eine Anordnung und einen Verteiler, um Befestigungselemente unterschiedlicher Größe oder Art von mehreren automatischen Schraubenzuführmaschinen in und durch den Verteiler einem entfernten Befestigungswerkzeug zuzuführen Position, wobei ein Befestigungselement von den automatischen Schraubenzuführmaschinen ausgegeben und an den entfernten Ort geliefert wird, bevor ein anderes Befestigungselement von einer der Schraubenzuführmaschinen ausgegeben wird.

Es ist daher die Aufgabe vorliegender Erfindung, eine einfache, robuste und schaltungstechnisch wenig anfällige Elementweiche bereitzustellen, die die selektive Zufuhr einzelner unterschiedlicher Verbindungselemente zu einem Verbindungsgerät, beispielsweise einem Setzgerät, ermöglicht.

### 3. Zusammenfassung der Erfindung

Die obige Aufgabe wird durch eine nicht-wegvariable Elementweiche gemäß dem unabhängigen Patentanspruch 1, durch ein Zufuhrverfahren für formschlüssig geführte Verbindungselemente gemäß dem unabhängigen Patentanspruch 9, durch ein Herstellungsverfahren für die nicht-wegvariable Elementweiche gemäß dem unabhängigen Patentanspruch 10 sowie durch ein Verarbeitungsgerät in Verbindung mit Zufuhrquellen und der nicht-wegvariablen Elementweiche gemäß dem unabhängigen Patentanspruch 13 gelöst. Vorteilhafte Ausgestaltungen und Weiterentwicklungen vorliegender Erfindung ergeben sich aus der folgenden Beschreibung, den begleitenden Zeichnungen sowie den anhängenden Patentansprüchen.

Die vorliegende Erfindung ist auf eine nicht-wegvariable Elementweiche, insbesondere für Verbindungselemente, gerichtet. Die Elementweiche ist kontinuierlich durch die darin formschlüssig geführten, insbesondere kopfgeführten, Elemente nur in einer Zufuhrrichtung von einer Mehrzahl von Profilbahnen in eine im Vergleich zur Mehrzahl reduzierte Anzahl von Profilbahnen passierbar. Dazu stellt die Elementweiche eine feste Verbindung zwischen einer Hauptprofilbahn und mindestens einer ersten Profilbahn her. Zudem werden die zu transportierenden Elemente in einer Profilbahn und in der Elementweiche durch Formschluss zwischen Element und Profilbahn und damit zwischen Element und Elementweiche lageorientiert geführt.

Die erfindungsgemäße nicht-wegvariable Elementweiche eröffnet die Möglichkeit, beispielsweise einem Setzgerät lageorientiert unterschiedliche Arten von Fügeelementen zuzuführen. Dabei erfordert die Elementweiche keinerlei Schaltungstechnik zur Wegveränderung der Fügeelemente innerhalb der Weiche. Stattdessen sind die von den Elementen zu durchlaufenden Wege innerhalb der Elementweiche fest definiert. Aufgrund ihres Aufbaus ermöglicht die nicht-wegvariable Elementweiche die Verbindung von mindestens zwei Profilbahnen. Vorzugsweise wird innerhalb der Elementweiche eine Hauptprofilbahn mit mindestens einer weiteren Profilbahn verbunden, sodass bevorzugt dann die Zufuhr der Elemente nur noch über die Hauptprofilbahn zum Setzgerät erfolgt. Natürlich sind anstelle eines Setzgeräts auch andere elementverarbeitenden Geräte denkbar, der lageorientiert Elemente zugeführt werden müssen. Dabei eröffnen die Profilbahnen in gleicher Weise wie die Hauptprofilbahn die Möglichkeit, dass aufgrund des Formschlusses der Elemente innerhalb der Hauptprofilbahn und der Profilbahn die Elemente lageorientiert am Verarbeitungsgerät ankommen. Die Elementweiche ist bevorzugt modular aufgebaut, das bedeutet, dass mehrere Profilbahnen mit der Hauptprofilbahn verbindbar sind. Auf diese Weise ist es möglich, eine beliebige Anzahl an Zufuhrquellen mit unterschiedlich konfigurierten Elementen über jeweils eine Profilbahn der Hauptprofilbahn zuzuführen. Die Elementweiche mit ihrer modularen Bauweise ermöglicht, dass dann die unterschiedlichsten Elemente in die Hauptprofilbahn einlaufen und mithilfe dieser zum Setzgerät transportiert werden können. Sofern eine getaktete Zufuhr der Elemente über die Profilbahnen realisiert wird, ist auch gezielt ein Element gewünschter Konfiguration dem Verarbeitungsgerät bzw. Setzgerät zuführbar.

Erfindungsgemäß weist die Hauptprofilbahn einen T-förmigen Querschnitt mit einer Kopfseite und einer Schaftseite auf und die mindestens eine erste Profilbahn mündet in einem Verbindungsbereich kopfseitig oder schaftseitig in die Hauptprofilbahn.

Um eine Verbindung zwischen der Hauptprofilbahn und der mindestens einen Profilbahn für die Zuleitung unterschiedlich konfigurierter Elemente zu realisieren, ist in der Elementweiche ein Verbindungsbereich vorgesehen. Aufgrund der genutzten Profilbahnen weisen die darin bewegten Elemente eine bestimmte Lageorientierung auf. Daher ist es erforderlich, dass bei der Zufuhr eines weiteren Elements über eine weitere Profilbahn zur Hauptprofilbahn die gleiche Orientierung des aus der Profilbahn kommenden Elements wie in der Hauptprofilbahn sichergestellt ist. Da zudem der Querschnitt der Hauptprofilbahn T-förmig ausgebildet ist, werden der Hauptprofilbahn die Elemente in annähernd paralleler Orientierung zugeführt. Dementsprechend wird die Profilbahn entweder an der Kopfseite des T-Querschnitts oder an der Fußseite des T-Querschnitts mit der Hauptprofilbahn verbunden. Der T-Querschnitt stellt sicher, dass bevorzugt kopfgeführte Verbindungselemente über die Elementweiche zugeführt werden können. Dabei entspricht der Querbalken des T-Querschnitts dem Kopfbereich, während in dem senkrechten Abschnitt des T-Querschnitts ein Schaft eines Elements führbar ist.

Im Vergleich zum oben beschriebenen T-förmigen Querschnitt der Hauptprofilbahn und der Profilbahn lässt sich der Querschnitt dieser Bahnen auch noch allgemeiner definieren, was jedoch nicht erfindungsgemäß ist. Entsprechend wäre der Querschnitt dann an eine noch breitere Vielfalt von Verbindungselementen und überhaupt zuführbaren Elementen anpassbar. Zu diesem Zweck weist die Hauptprofilbahn und die mindestens eine Profilbahn jeweils einen Querschnitt auf, der zumindest einen ersten Bereich umfasst, der spiegelsymmetrisch zu einer Senkrechten der Zufuhrrichtung als Symmetrieachse ist und der breiter als hoch ist, wobei eine Höhe parallel zur Symmetrieachse bestimmbar ist.

Eine derartige Querschnittsgestaltung der Hauptprofilbahn und der mindestens einen Profilbahn eröffnet die Möglichkeit, auch Muttern, Scheiben, Ringelemente oder dergleichen mithilfe der Elementweiche und einem angepassten Querschnitt der Profilbahnen zu transportieren. In diesem Zusammenhang ist es möglich, dass die Hauptprofilbahn und die mindestens eine Profilbahn im jeweiligen Querschnitt eine größere Breite als Höhe aufweist. Eine derartige Querschnittsform bedeutet in einer Schwerkraftbetrachtung, dass die Elemente querliegend in Zufuhrrichtung transportiert werden, und dabei in ihrem Querschnitt breiter als hoch sind.

Gemäß einem weiteren nicht erfindungsgemäßen Beispiel weist der Querschnitt der mindestens einen Profilbahn und der Hauptprofilbahn zumindest einen zweiten Bereich auf, der spiegelsymmetrisch zur Senkrechten der Zufuhrrichtung als Symmetrieachse ist und der eine geringere Breite als die erste Breite aufweist.

Mithilfe der Definition dieses zusätzlichen zweiten Bereichs ist eine allgemeine Definition bspw. des T-förmigen Querschnitts (siehe oben) möglich. Des Weiteren sind aber auch mit der Definition des ersten und des zweiten Bereichs weitere Querschnittsgeometrien von Elementen und somit von der transportierenden Hauptprofilbahn und der Mehrzahl von Profilbahnen möglich, die eine andere als die T-Form aufweisen.

Weiterhin kann die mindestens eine erste Profilbahn im Verbindungsbereich in die Hauptprofilbahn einlaufen, wobei die Symmetrieachse der Querschnitte der mindestens einen ersten Profilbahn und der Hauptprofilbahn annähernd kollinear zueinander ausgerichtet sind. Das hier beschriebene Beispiel erläutert ein weiteres Kriterium zur Ausrichtung der Querschnitte der mindestens einen Profilbahn zum Querschnitt der Hauptprofilbahn. Die spezielle Querschnittsorientierung sowie die gegenseitige Querschnittsanpassung sind erforderlich, damit überhaupt transportierte Elemente aus der Profilbahn in die Hauptprofilbahn überführt werden können. Werden vorzugsweise rotationssymmetrische Elemente, wie bspw. Stanzniete, Schrauben, Nägel, Bolzen, kopfgeführt in der mindestens einen Profilbahn transportiert, dann ist eine kollineare Ausrichtung der Symmetrieachsen der Profilbahn und Hauptprofilbahn zueinander ausreichend. Sollten die Querschnitte der mindestens einen Profilbahn und der Hauptprofilbahn aber an Elemente angepasst sein, die bspw. nicht um ihre Längsachse drehbar innerhalb der Profilbahnen sind, dann wird noch ein weiteres Geometrie- bzw. Ausrichtungskriterium definiert. In diesem Fall ist es möglich, dass der Querschnitt und die mindestens eine Profilbahn selbst sowie die Hauptprofilbahn durch Symmetrieebenen charakterisiert sind. Sollten darin Elemente geführt sein, wie bspw. eine Schraube mit Sechskantkopf oder eine Sechskantmutter, dann sind beispielsweise die Symmetrieebenen von Profilbahn und Hauptprofilbahn komplanar zueinander ausgerichtet. In diesem Fall kann gewährleistet werden, dass die Elemente reibungslos von der mindestens einen Profilbahn in die Hauptprofilbahn überführbar sind.

Gemäß einer weiteren bevorzugten Ausführungsform vorliegender Erfindung ist die mindestens eine erste Profilbahn im Querschnitt ebenfalls T-förmig ausgebildet. Zudem weist sie bevorzugt einen Kopfbereich und einen Schaftbereich auf und die Profilbahn läuft im Verbindungsbereich der Elementweiche mit dem Schaftbereich in die Hauptprofilbahn kopfseitig ein.

Die gerade definierte Konfiguration nimmt darauf Bezug, dass die aus der Profilbahn der Hauptprofilbahn zugeführten Elemente die gleiche Orientierung im Raum aufweisen müssen wie die in der Hauptprofilbahn geführten Elemente. Um diese Lageorientierung sicherzustellen und zudem ein Verklemmen der zugeführten Elemente innerhalb der Elementweiche zu vermeiden, werden innerhalb des Verbindungsbereichs die Profilbahnen kopfseitig oder schaftseitig mit der Hauptprofilbahn verbunden.

Zudem ist es bevorzugt, dass der Kopfbereich der mindestens einen ersten Profilbahn eine in Bezug auf die Zufuhrrichtung laterale Kopfauflage für ein zu transportierendes Element bereitstellt, die im Verbindungsbereich der Elementweiche lateral zurückspringt.

Im Verbindungsbereich der Elementweiche geht die Profilbahn kopfseitig in die Hauptprofilbahn über. Um hier einen reibungslosen Übergang der Elemente von der Profilbahn in die Hauptprofilbahn zu gewährleisten, wird eine durch die Profilbahn bereitgestellte Kopfführung mithilfe der lateralen Kopfauflage im Verbindungsbereich der Elementweiche reduziert und dann ganz aufgelöst. Mithilfe dieses Übergangs wird die Kopfführung von der Profilbahn auf die Hauptprofilbahn übergeben, ohne dass ein bewegtes Element in seiner Zufuhrbewegung gestoppt oder behindert wird. Zudem stellt die Übergabe von der lateralen Kopfauflage der Profilbahn auf die laterale Kopfauflage der Hauptprofilbahn sicher, dass die Lageorientierung des bewegten Elements innerhalb der Elementweiche erhalten bleibt.

Weiterhin bevorzugt ist die mindestens eine erste Profilbahn im Querschnitt T-förmig ausgebildet und umfasst einen Kopfbereich und einen Schaftbereich. Zudem läuft die Profilbahn bevorzugt im Verbindungsbereich mit dem Kopfbereich in die Hauptprofilbahn schaftseitig ein.

In Analogie zu der oben beschriebenen bevorzugten Ausführungsform wird hier die Profilbahn aus Richtung des verlängerten senkrechten Abschnitts des T-Querschnitts der Hauptprofilbahn mit der Hauptprofilbahn verbunden. In diesem Fall läuft somit das in der Profilbahn geführte Element schaftseitig und über den Schaftbereich des T-förmigen Querschnitts der Hauptprofilbahn in die Hauptprofilbahn ein. Damit das in der Profilbahn geführte Element nicht mit der bevorzugten lateralen Kopfführung der Hauptprofilbahn kollidiert, ist es ebenfalls bevorzugt, dass der Formschluss bzw. die Kopfführung der Hauptprofilbahn innerhalb des Verbindungsbereichs zur Profilbahn aufgehoben wird. Im Speziellen stellt bevorzugt die Hauptprofilbahn kopfseitig eine in Bezug auf die Zufuhrrichtung laterale Kopfauflage bereit. Diese laterale Kopfauflage springt zumindest für einen Bahnabschnitt im Verbindungsbereich lateral zurück, wenn die Profilbahn schaftseitig in die Hauptprofilbahn mündet.

Gemäß einer weiteren bevorzugten Ausführungsform der erfindungsgemäßen Elementweiche sind die Hauptprofilbahn und die mindestens eine erste Profilbahn angrenzend an einen Kopfbereich geschlossen ausgebildet. Lediglich in einem Verbindungsbereich zwischen der Hauptprofilbahn und der Profilbahn ist der Kopfbereich offen.

Die Kopfführung der Elemente innerhalb der Elementweiche wird im Wesentlichen durch die Wirkung der Schwerkraft erzielt. Während die Schwerkraft das Element in die Profilbahn drückt, sorgt der Formschluss dafür, dass sich der Kopf des Elements an der Profilbahn abstützt und das Element nicht durch die Profilbahn hindurch fällt. Sollte die Wirkung der Schwerkraft beispielsweise durch einen Überkopfbetrieb ausgeschaltet sein, besteht der Nachteil, dass die Elemente aus der Hauptprofilbahn oder der Profilbahn herausfallen könnten. Daher werden bevorzugt die Kopfbereiche der Profilbahn und der Hauptprofilbahn verschlossen. Gemäß unterschiedlicher bevorzugter Ausführungsformen vorliegender Erfindung ist für diesen Verschluss ein Deckel im Kopfbereich vorgesehen. In gleicher Weise ist es ebenfalls möglich, den Kopfbereich der Hauptprofilbahn durch eine darüber angeordnete weitere Profilbahn zu verschließen. In gleicher Weise könnte eine Hauptprofilbahn eine darunter angeordnete Profilbahn verschließen.

Weiterhin bevorzugt ist die erfindungsgemäß bevorzugte Elementweiche mit einer Druckluftquelle verbunden, sodass Elemente mittels Druckluft durch die Elementweiche bewegbar sind. Gemäß einer weiteren bevorzugten Ausführungsform der erfindungsgemäßen Elementweiche stellt diese eine Stapelkonstruktion aus einer Hauptprofilbahn und mehreren Profilbahnen dar.

Vorliegende Erfindung offenbart zudem ein Zufuhrverfahren für ein formschlüssig geführtes, insbesondere ein kopfgeführtes, Verbindungselement, dass die folgenden Schritte aufweist: Bereitstellen einer Mehrzahl unterschiedlicher Verbindungselemente, die jeweils über eine Hauptprofilbahn einem Verbindungsgerät, insbesondere einem Setzgerät, zuführbar sind, Verbinden der Mehrzahl von Profilbahnen mit einer nicht-wegvariablen Elementweiche gemäß einer der oben beschriebenen erfindungsgemäßen Ausführungsformen, sodass die Mehrzahl unterschiedlicher Verbindungselemente in der Hauptprofilbahn zusammen geführt werden, und getaktetes Zuführen der unterschiedlichen Verbindungselemente über die nicht-wegvariable Elementweiche zum Verbindungsgerät derart, dass mindestens ein Verbindungselement über eine Profilbahn kopfseitig oder schaftseitig in die Hauptprofilbahn gelangt.

Vorliegende Erfindung umfasst zudem ein Herstellungsverfahren für eine nicht-wegvariable Elementweiche, das die folgenden Schritte aufweist: Bereitstellen einer Hauptprofilbahn, in der ein Element formschlüssig führbar ist, vorzugsweise kopfgeführt, Bereitstellen mindestens einer Profilbahn, in der das Element formschlüssig führbar ist, vorzugsweise kopfgeführt, fest Verbinden der Hauptprofilbahn mit der mindestens einen Profilbahn in einem Verbindungsbereich, wobei die Hauptprofilbahn einen T-förmigen Querschnitt mit einer Kopfseite und einer Schaftseite aufweist und die mindestens eine Profilbahn kopfseitig oder schaftseitig in die Hauptprofilbahn mündet.

Ein Beispiel für ein nicht erfindungsgemäßes Herstellungsverfahren für eine nicht-wegvariable Elementweiche weist die Schritte auf: Bereitstellen einer Hauptprofilbahn, in der ein Element formschlüssig führbar ist, vorzugsweise kopfgeführt, Bereitstellen mindestens einer Profilbahn, in der das Element formschlüssig führbar ist, vorzugsweise kopfgeführt, fest Verbinden der Hauptprofilbahn mit der mindestens einen Profilbahn in einem Verbindungsbereich derart, dass die Profilbahn in einer Zufuhrrichtung des Elements in der Elementweiche in die Hauptprofilbahn einläuft, wobei die Hauptprofilbahn und die mindestens eine Profilbahn jeweils einen Querschnitt aufweisen, der zumindest einen ersten Bereich umfasst, der spiegelsymmetrisch zu einer Senkrechten zur Zufuhrrichtung als Symmetrieachse ist und der breiter als hoch ist, wobei eine Höhe parallel zur Symmetrieachse bestimmbar ist und die Hauptprofilbahn und die mindestens eine Profilbahn an einer Seite senkrecht zur Symmetrieachse miteinander verbunden werden.

Im Rahmen des Herstellungsverfahrens ist es weiterhin bevorzugt, dass eine in Bezug auf eine Zufuhrrichtung vorhandene laterale Kopfauflage der Hauptprofilbahn lateral zurückgesetzt wird, wenn eine Profilbahn schaftseitig mit der Hauptprofilbahn verbunden wird. In analoger Weise ist es bevorzugt, dass eine in Bezug auf eine Zufuhrrichtung vorhandene laterale Kopfauflage der Profilbahn lateral zurückgesetzt wird, wenn die Profilbahn kopfseitig mit der Hauptprofilbahn verbunden wird. Mithilfe des hier beschriebenen bevorzugten Herstellungsverfahrens ist es möglich, die oben bereits charakterisierten konstruktiven Besonderheiten der Elementweiche umzusetzen.

Vorliegende Erfindung umfasst zudem ein System bestehend aus einem Verarbeitungsgerät für Elemente, insbesondere einem Setzgerät, in Verbindung mit einer Mehrzahl von Zufuhrquellen für unterschiedliche Elemente, vorzugsweise Verbindungselemente, wobei das System eine nicht-wegvariable Elementweiche gemäß einer der oben beschriebenen erfindungsgemäßen Ausführungsformen umfasst und die Elemente der Zufuhrquellen über mindestens eine Profilbahn und eine Hauptprofilbahn dem Verarbeitungsgerät mit Hilfe der nicht-wegvariablen Elementweiche zuführbar sind.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine perspektivische Ansicht einer bevorzugten Ausführungsform der erfindungsgemäßen Elementweiche mit einer Hauptprofilbahn und einer kopfseitig in die Hauptprofilbahn einlaufenden weiteren Profilbahn,
- Figur 2: eine Explosionsansicht der Elementweiche gemäß Fig. 1,
- Figur 3a, b: eine schematische Darstellung bevorzugter Querschnitte von Hauptprofilbahn und Profilbahn,
- Figur 4: eine bevorzugte Ausführungsform der Hauptprofilbahn mit angedeuteter darüber angeordneter Profilbahn und Deckel,
- Figur 5: eine perspektivische Draufsicht auf die über der Hauptprofilbahn angeordneten Profilbahn gemäß Fig. 3,
- Figur 6: eine vergrößerte Darstellung des eingekreisten Bereichs aus Fig. 5,
- Figur 7: eine vergrößerte Darstellung des Übergangs der Profilbahn in die Hauptprofilbahn gemäß Fig. 6 mit Verbindungselementen,
- Figur 8: eine seitliche Schnittdarstellung einer bevorzugten Ausrührungsform der erfindungsgemäßen Elementweiche mit einem sich durch die Hauptprofilbahn bewegenden Verbindungselement,
- Figur 9a: eine Schnittdarstellung entlang der Linie 9-9 aus Fig. 8,
- Figur 9b: eine vergrößerte Darstellung des Elements aus Fig. 9a,
- Figur 10a: eine Schnittdarstellung entlang der Linie 10-10 aus Fig. 8,
- Figur 10b: eine vergrößerte Darstellung des Elements aus Fig. 10a,
- Figur 11a: eine Schnittdarstellung entlang der Linie 11-11 aus Fig. 8,
- Figur 11b: eine vergrößerte Darstellung des Elements aus Fig. 11a,
- Figur 12a: eine Schnittdarstellung entlang der Linie 12-12 aus Fig. 8,
- Figur 12b: eine vergrößerte Darstellung des Elements aus Fig. 12a,
- Figur 13a: eine Schnittdarstellung entlang der Linie 13-13 aus Fig. 8,
- Figur 13b: eine vergrößerte Darstellung des Elements aus Fig. 13a,
- Figur 14a: eine Schnittdarstellung entlang der Linie 14-14 aus Fig. 8,
- Figur 14b: eine vergrößerte Darstellung des Elements aus Fig. 14a,
- Figur 15: eine perspektivische Schnittdarstellung einer weiteren bevorzugten Ausführungsform der Elementweiche mit einer schaftseitig in die Hauptprofilbahn einlaufenden Profilbahn,
- Figur 16: eine vergrößerte Darstellung der bevorzugten Elementweiche gemäß Fig. 15,
- Figur 17: eine vergrößerte Darstellung des bevorzugten schaftseitigen Übergangs der Profilbahn in die Hauptprofilbahn,
- Figur 18: eine bevorzugte Ausführungsform der erfindungsgemäßen Elementweiche in Stapelform,
- Figur 19: eine weitere bevorzugte Ausführungsform der Elementweiche als ein weiterer Stapel,
- Figur 20: eine weitere bevorzugte Ausführungsform der Elementweiche als Stapel bestehend aus einer Hauptprofilbahn und drei weiteren Profilbahnen,

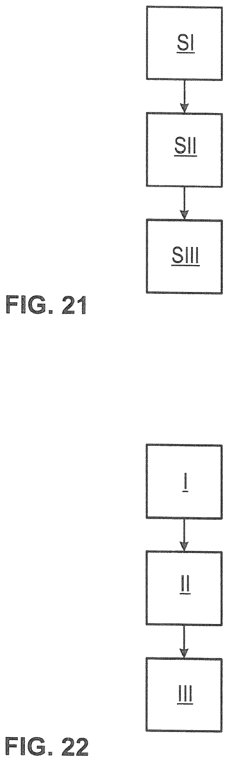

- Figur 21: ein Flussdiagramm einer bevorzugten Ausführungsform des erfindungsgemäßen Zufuhrverfahrens,
- Figur 22: ein Flussidagramm einer bevorzugten Ausführungsform eines erfindungsgemäßen Herstellungsverfahrens,
- Figur 23: ein Blockschaltbild eines bevorzugten Fügegeräts mit verschiedenen Zufuhrquellen für Verbindungselemente in Kombination mit mindestens einer Elementweiche.

### 5. Detaillierte Beschreibung der bevorzugten Ausführungsformen

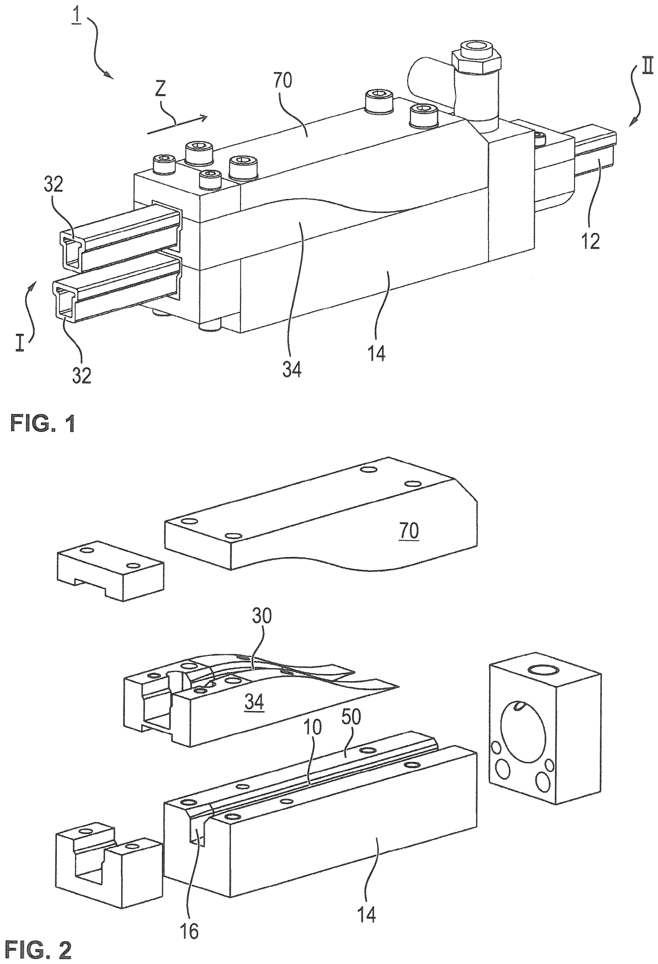

Die vorliegende Erfindung betrifft eine Elementweiche 1, wie sie in einer konstruktiv einfachen Ausführungsform in Fig. 1 gezeigt ist. Die Elementweiche 1 ist modulartig aufgebaut. Dabei bildet eine Hauptprofilbahn 10 ein Basismodul, mit dem mindestens eine weitere Profilbahn 30 kombinierbar ist (siehe Fig. 2). Die Hauptprofilbahn 10 und die mindestens eine Profilbahn 30 werden bevorzugt über Profilschläuche oder allgemein Profilleitungen 12, 32 mit Elementen E versorgt. Die Profilleitungen 12, 32 sind genauso wie die Hauptprofilbahn 10 und die mindestens eine Profilbahn 30 an die Geometrie der Elemente E, vorzugsweise Verbindungselemente, Fügeelemente und dergleichen, angepasst. Weiter bevorzugt sind die Hauptprofilbahn 10 und die Profilbahnen 30 derart ausgestaltet, dass die Elemente E während ihrer Bewegung in diesen Bahnen 10, 30 kopfgeführt sind.

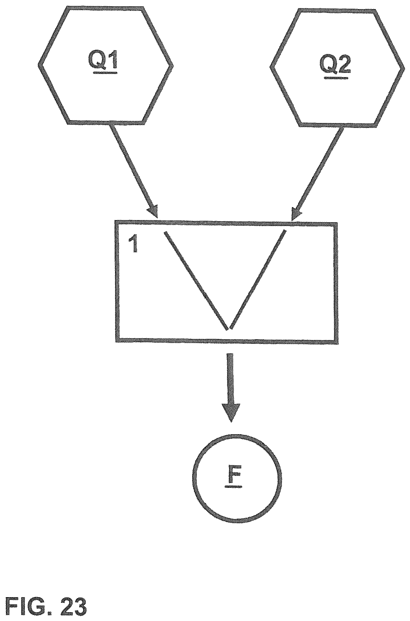

Innerhalb einer Basis 14 ist die Hauptprofilbahn 10 vorgesehen. Die Hauptprofilbahn 10 hat einen T-förmigen Querschnitt 16, um Elemente E mit einem Schaft und einem Kopf, vorzugsweise Stanzniete, Bolzen, Schrauben und dergleichen, darin formschlüssig zu führen. Die oben genannten Profilleitungen 12, 32 führen bevorzugt die Elemente E aus Vorratsbehältern, Magazinen oder Vereinzelern der Elementweiche 1 zu. Über die Hauptprofilbahn 10 in der Elementweiche 1 werden die Elemente E zu einer Verarbeitungseinheit weitergeleitet. Eine Verarbeitungseinheit ist vorzugsweise ein Setzgerät, ein Schraubautomat, ein Bolzenschussgerät oder dergleichen. Es ist ebenfalls bevorzugt, die Elemente E an eine Speichereinheit, eine Verpackungseinheit, eine Magaziniereinheit oder einen Elementbahnhof zur Vorbereitung der Bestückung von Magazinen weiterzuleiten. Eine beispielhafte Anordnung in Form eines Blockdiagramms ist in Fig. 23 dargestellt. Hier sind zwei Quellen Q1 und Q2 für Elemente vorgesehen. Dies sind bevorzugt Vereinzeler für Verbindungselemente als Schüttgut. Um die Verbindungselement kontrolliert der Elementweiche 1 zuführen zu können, ist die Zufuhr von den einzelnen Quellen Q1 und Q2 gezielt zu- und abschaltbar. Auf diese Weise wird eine Kollision von Elementen in der Elementweiche 1 vermieden. Innerhalb der Elementweiche 1 werden die ankommenden Elemente in die Hauptprofilbahn geleitet, die mit einem Verarbeitungsgerät, hier bevorzugt ein Fügegerät F, verbunden ist. Natürlich kann die Anzahl an Quellen Q1 und Q2 größer sein.

Die Hauptprofilbahn 10 ist über einen bevorzugten Befestigungsbereich 50 mit mindestens einer Profilbahn 30 fest verbindbar. Die Profilbahn 30 ist innerhalb eines ersten Oberblocks 34 vorgesehen. Der erste Oberblock 34 wird vorzugsweise derart an der Basis 14 befestigt, dass er die Hauptprofilbahn 10 einseitig verschließt. Somit hat der erste Oberblock 34 auch die Funktion eines Deckels für die Hauptprofilbahn 10. Sollte die Elementweiche 1 keinen Oberblock 34 nutzen, ist es ebenfalls bevorzugt, die Hauptprofilbahn ganz oder teilweise mit einem Deckel oder einem Deckblock 90 zu verschließen.

Die Profilbahn 30 im Oberblock 34 ist fest mit der Hauptprofilbahn 10 verbunden. In gleicher Weise ist es ebenfalls bevorzugt, einen Unterblock 74 vorzusehen, der ebenfalls mindestens eine Profilbahn 70 aufweist, die mit der Hauptprofilbahn 10 fest verbunden ist. "Fest verbunden" bedeutet im Hinblick auf die Verbindung zwischen Hauptprofilbahn 10 und den Profilbahnen 30, 70, dass diese Bahnen weder bewegbar noch schaltbar sind, um den Weg der Elemente E zu verändern. Die Elementweiche 1 definiert somit einen festen Weg der Elemente E, der nur durch eine konstruktive Umgestaltung der Elementweiche 1, insbesondere einen Umbau, veränderbar ist. Damit ist die Elementweiche 1 nicht schaltbar und ohne mechanisch bewegte Schaltelemente aufgebaut. Dies gewährleistet einen geringen Wartungsaufwand sowie eine niedrige Störanfälligkeit der Elementweiche 1.

Basierend auf der bevorzugten Kombination der Basis 14 mit mindestens einem Oberblock 34 und/oder mindestens einem Unterblock 74 ist die Hauptprofilbahn 10 mit mindestens einer, vorzugsweise einer Mehrzahl von Profilbahnen 30, 70, modular kombinierbar. Entsprechend ergibt sich eine kaskadierte Elementweiche 1, in der die Elemente E aus mindestens einer Profilbahn 30, 70 mit den Elementen E aus der Hauptprofilbahn 10 in der Hauptprofilbahn 10 zusammengeführt werden.

Aufgrund dieses kaskadenartigen Aufbaus der Elementweiche 1 und der fehlenden Schaltbarkeit wird diese auch nur in der Zufuhrrichtung Z von den Elementen E durchlaufen. Die Zufuhrrichtung Z verläuft von einem Eingangsbereich I der Elementweiche 1 zu einem Ausgangsbereich II der Elementweiche 1. Der Eingangsbereich I zeichnet sich durch eine höhere Zahl an Profilbahnen 10, 30, 70 als der Ausgangsbereich II aus, wobei hier die Hauptprofilbahn 10 allgemein als Profilbahn gezählt wird.

Innerhalb der Elementweiche 1, die nur als Einbahnstraßen-Elementweiche 1 betrieben wird, und der angeschlossenen Profilschläuche 12, 32 werden die Elemente E bevorzugt auf verschiedene Weise bewegt. Die Bewegung der Elemente E erfolgt mittels Schwerkraft, Massenträgheit, Druckluft, Wirbelstrom, Vibration oder mit einer Kombination davon sowie mit anderen denkbaren Antriebsmedien oder -mitteln, die die Elemente E in einer Profilbahn bewegen können.

Wie oben bereits beschrieben worden ist, wird in der Basis 14 die Hauptprofilbahn 10 als ein erster Zufuhrweg für die Elemente E erzeugt. In Abhängigkeit vom Material der Basis 14, die vorzugsweise aus Metall oder Kunststoff besteht, werden bevorzugt spanabtragende Verfahren oder Spritzguss zum Herstellen der Basis 14 mit der Hauptprofilbahn 10 verwendet. Ähnliches gilt für die unten beschriebenen Bahnkonstruktionen.

Die Elemente E, vorzugsweise Verbindungselemente, sind zumindest im Querschnitt betrachtet spiegelsymmetrisch zu einer Längsachse aufgebaut. Zu derartigen Elementen zählen bevorzugt Schrauben mit einem eckigen oder unrunden Kopfumfang, Muttern mit einer eckigen oder unrunden Umfangskontur und Scheiben, um nur einige Beispiele zu nennen. Derartige Elemente E sind gemäß einer Ausführungsform in ihrem Querschnitt parallel zur Längsachse T-förmig ausgebildet, wie beispielsweise Stanzniete oder Schrauben. Gemäß einer weiteren bevorzugten Ausführungsform weisen sie im axialen Querschnitt eine Verdickung mit zwei einander gegenüberliegend jeweils in axialer Richtung verlaufenden Stegen auf ähnlich einer Kreuzform, wie beispielsweise eine Blindnietschraube. Zudem werden bevorzugt um eine Längsachse rotationssymmetrische Elemente E über die Elementweiche 1 zugeführt, wie beispielsweise Stanzniete mit oder ohne Senkkopf, Bolzen, Nägel, Blindnietmuttern und dergleichen.

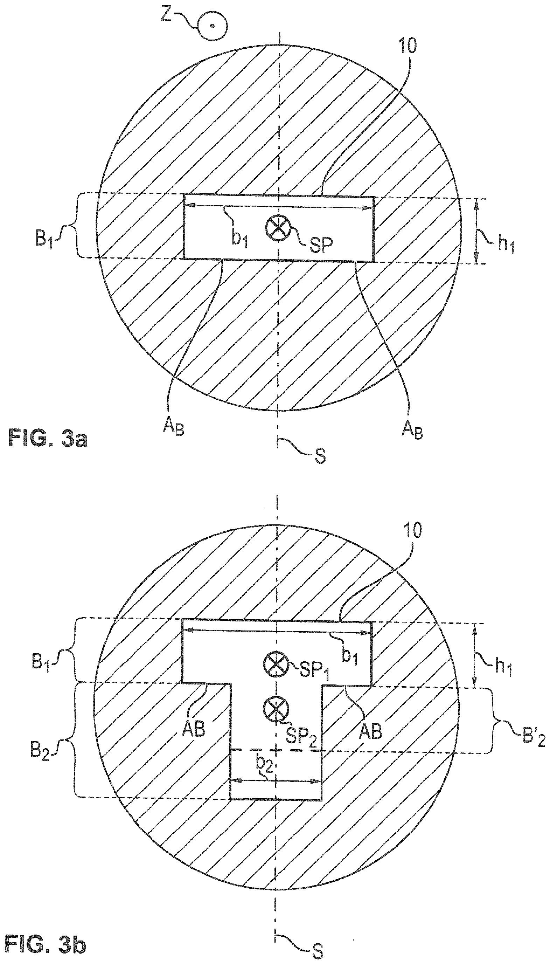

Um diese Elemente E durch die Elementweiche 1 transportieren zu können, vorzugsweise mittels Druckluft, weist ein Querschnitt der Hauptprofilbahn 10 und der mindestens einen Profilbahn 30 mindestens einen ersten Bereich B₁ auf (siehe Fig. 3a, b). Der erste Bereich B₁ ist bezogen auf die Zufuhrrichtung Z spiegelsymmetrisch zu einer Senkrechten S der Zufuhrrichtung Z als Symmetrieachse ausgebildet. Zudem zeichnet sich der erste Bereich B₁ dadurch aus, dass seine Höhe h₁ gemessen parallel zur Senkrechten S kleiner ist als seine Breite b₁ gemessen senkrecht zur Senkrechten S. Ein derartiger Querschnitt der Hauptprofilbahn 10 und der Profilbahnen 30, 70 innerhalb der Elementweiche 1 eignet sich zum Transport von Muttern, Scheiben oder ähnlich geformten Elementen E. Der erste Bereich B₁ des Querschnitts der Profilbahnen 10, 30, 70 stellt dazu ausreichend große laterale bis durchgehende Auflagebereiche A_{B1} bereit. Diese Auflagebereiche A_{B} gewährleisten einen lageorientierten Transport der Elemente E durch die Elementweiche 1. Des Weiteren ermöglichen die Anlagebereiche A_{B} eine sichere Übergabe der Elemente E zwischen der mindestens einen Profilbahn 30; 70 und der Hauptprofilbahn 10. Dies wird unten noch ausführlich am Beispiel von Stanznieten als Element E beschrieben.

Erfindungsgemäß bevorzugt können die einander gegenüberliegenden Seiten des ersten Bereichs B₁ auch nicht parallel verlaufen. In diesem Zusammenhang ist auch jede winklige Ausrichtung der Seiten ungleich 90° oder ungleich 0° in Bezug auf die Senkrechte S denkbar. Denn trotz dieses Seitenverlaufs in der Querschnittsform der Profilbahnen 10; 30; 70 bleibt die Lageorientierung des Elements E in der Profilbahn 10; 30; 70 erhalten.

Weiterhin bevorzugt umfasst der Querschnitt der Profilbahn 10; 30; 70 einen zweiten Bereich B₂. Der zweite Bereich B₂ ist ebenfalls spiegelsymmetrisch zur Senkrechten S angeordnet. Im Vergleich zum ersten Bereich B₁ weist der zweite Bereich B₂ eine geringere Breite b₂ auf. In ähnlicher Weise wie im ersten Bereich B₁ sind die Begrenzungsseiten des zweiten Bereichs B₂ parallel, senkrecht oder beliebig winklig zur Senkrechten S ausgerichtet. Da der erste Bereich B₁ vorzugsweise eine größere Breite b₁ als der zweite Bereich B₂ aufweist, sind ebenfalls verlässliche Auflagebereiche A_{B} selbst bei einer geneigten Anordnung der Seiten vorhanden.

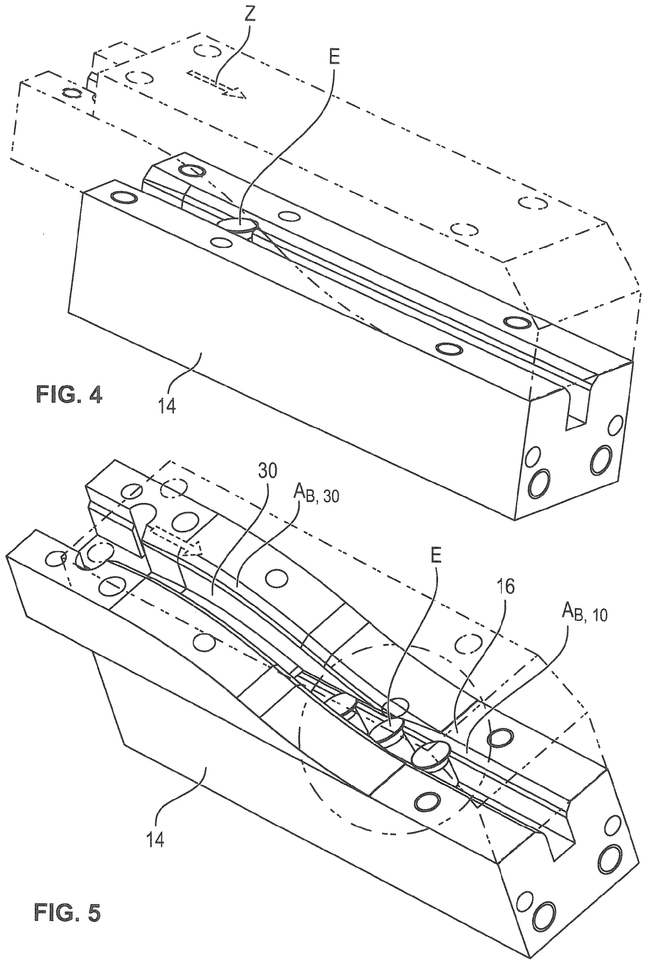

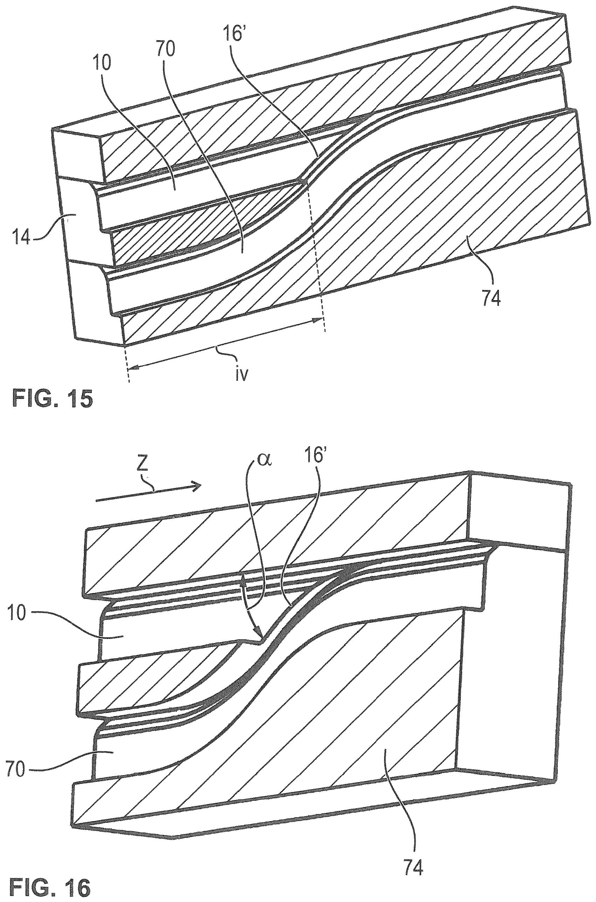

Vorzugsweise ist neben dem Querschnitt der Hauptprofilbahn 10 auch der Querschnitt der Profilbahnen 30; 70 T-förmig ausgebildet. Eine ähnliche T-förmige Gestalt ist auch in den bevorzugten Profilbahnen 10; 30; 70 der Fig. 4 bis 15 zu erkennen. Die T-förmig ausgebildeten Profilbahnen 10; 30; 70 werden für Elemente E mit Kopf genutzt. Dazu zählen Stanzniete, Schrauben, Nägel, Bolzen und dergleichen. Da der erste Bereich B₁ des Querschnitts ausreichende Auflagebereiche A_{B} sowie eine seitliche Führung für den Kopf des Elements E bereitstellt, spricht man auch von in der Elementweiche 1 kopfgeführten Elementen E. Aufgrund dieser Anordnung der Elemente E in der Hauptprofilbahn 10 und den Profilbahnen 30; 70 bezeichnet man den ersten Bereich B₁ auch als Kopfbereich und den zweiten Bereich B₂ als Schaftbereich. Wird somit bevorzugt die Hauptprofilbahn 10 im Verbindungsbereich 16 über den ersten Bereich B₁ mit der Profilbahn 30 verbunden, läuft die Profilbahn 30 kopfseitig in die Hauptprofilbahn 10 ein (siehe unten und Fig. 4). Wird des Weiteren bevorzugt die Hauptprofilbahn 10 im Verbindungsbereich über den zweiten Bereich B₂ mit der mindestens einen Profilbahn 70 verbunden, läuft die mindestens eine Profilbahn 70 schaftseitig in die Hauptprofilbahn 10 ein (siehe unten und Fig. 15).

Wie man anhand der Fig. 1, 2 und 4 erkennen kann, ist die Hauptprofilbahn 10 in der Basis 14 T-förmig ausgebildet. Während der Schaftbereich der Hauptprofilbahn 10 bevorzugt geschlossen ist, deckt der Oberblock 34 kopfseitig die Hauptprofilbahn 10 zumindest teilweise in Zufuhrrichtung Z ab. Innerhalb des Oberblocks 34 ist die Profilbahn 30 ausgebildet, die im Verbindungsbereich 16 kopfseitig in die Hauptprofilbahn 10 einläuft.

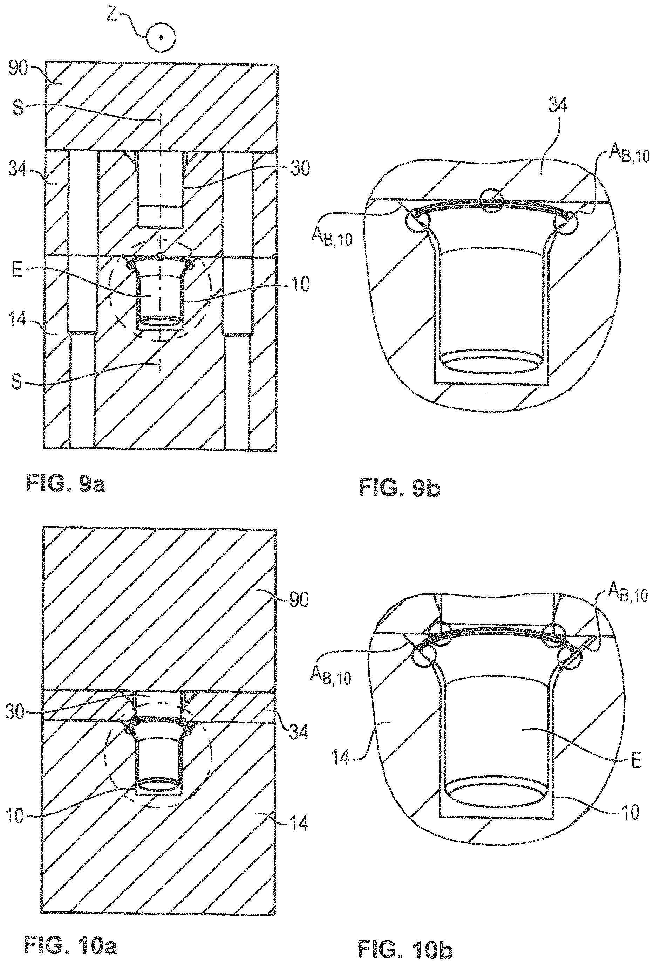

Wie man anhand von Fig. 5 erkennen kann, sind die Elemente E, hier Stanzniete, innerhalb der Hauptprofilbahn 10 kopfgeführt. Dazu liegt bevorzugt die Unterseite des Nietkopfes auf den Auflagebereichen A_{B} auf. Durch die Anordnung vom Nietkopf im ersten Bereich B₁ der Hauptprofilbahn 10 und vom Nietschaft im zweiten Bereich B₂ der Hauptprofilbahn 10 wird der Formschluss zwischen dem Element E und der Hauptprofilbahn 10 gewährleistet. Im bevorzugten schwerkraftunabhängigen Betrieb der Elementweiche 1 wird die Hauptprofilbahn 10 und die Profilbahn 30; 70 angrenzend an den ersten Bereich B₁ verschlossen, um ein Herausfallen der Elemente E zu vermeiden. Zudem liegt der Kopf des Elements E vorzugsweise an der Abdeckung der Hauptprofilbahn und der Profilbahn an, wie durch die Anlage- und Berührungspunkte der Figuren 9b, 10b, 11b, 12b, 13b und 14b hervorgehoben ist. Diese Anlage der Elemente E an der Hauptprofilbahn und der Profilbahn sowohl an der Kopfunter- wie auch an der Kopfoberseite bei T-förmigen Elementen E und an der Ober- und Unterseite bei nicht T-förmigen Elementen E ist ebenfalls Ausdruck der Kopfführung der Elemente E während der Bewegung durch die Elementweiche 1.

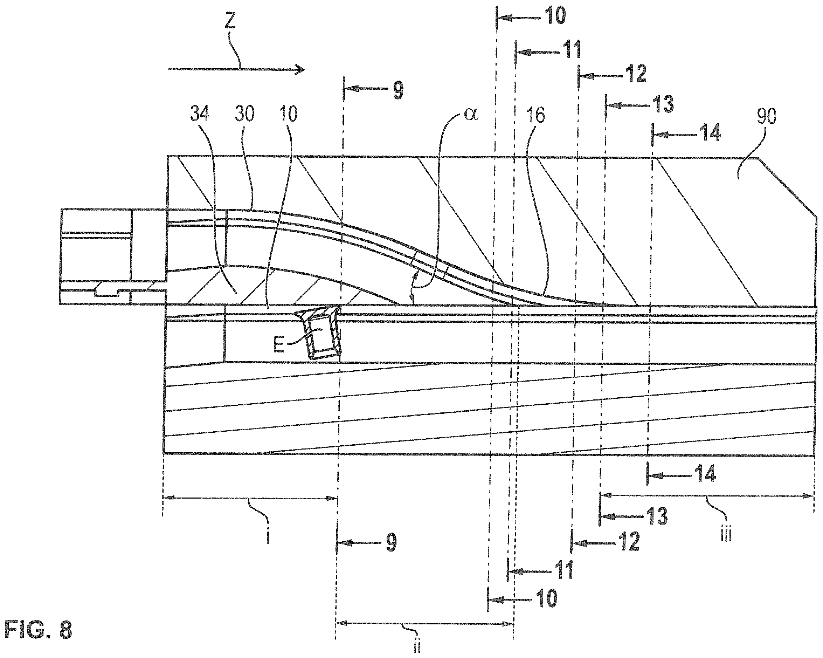

Die Elementweiche 1 der Fig. 5 ist in einer seitlichen Darstellung eines Längsschnitts in Fig. 8 gezeigt. Hier bewegt sich ein Stanzniet E in Zufuhrrichtung Z. Da der Stanzniet E trotz der formschlüssigen Führung in der Hauptprofilbahn 10 ein gewisses Spiel im ersten Bereich B₁, d.h. im Kopfbereich, besitzt, wird der Stanzniet E durch die antreibende Druckluft in der Hauptprofilbahn 10 geneigt. Die Deckelwirkung durch den Oberblock 34 bzw. die Kopfführung (siehe oben) verhindert ein weiteres Verkippen des Stanzniets E aufgrund der Kopfanlage. Das Verkippen ist durch den Angriff der antreibenden Kraft, bspw. Druckluft, im Schwerpunkt des Elements E und durch das Spiel des Kopfes des Elements E in der Kopfführung bedingt. Ein bevorzugter Schwerpunkt SP des Elements E ist in den Figuren 3a und 3b dargestellt. In Fig. 3a ist der Schwerpunkt SP mittig im Bereich B₁ angeordnet. Aufgrund des Schaftbereichs B₂ des T-förmigen Elements E in Fig. 3b ist der Schwerpunkt SP₁ im Vergleich zu Fig. 3a in Richtung des Bereichs B₂ verlagert. In Abhängigkeit von der Größe bzw. Länge des Schaftbereichs B₂ parallel zur Symmetrieachse S ist der Schwerpunkt SP unterschiedlich angeordnet. Ist der Bereich B'₂ kürzer ausgebildet (gestrichelte Linie in Fig. 3b), ist der Schwerpunkt SP₁ mehr in Richtung Bereich B₁ verlagert. Ist der Bereich B₂ länger ausgebildet, ist der Schwerpunkt SP₂ weiter in den Bereich B₂ hinein verlagert. Dies ist in Fig. 3 b durch die eingezeichneten Schwerpunkte SP₁ und SP₂ dargestellt. Somit hat eine antreibende Kraft, die im Schwerpunkt SP₂ angreift, eine stärkere Kipp- und Hebelwirkung auf das Eelement E in Zufuhrrichtung als eine antreibende Kraft, die im Schwerpunkt SP₁ angreift. Die Zufuhrrichtung Z ist jeweils durch einen Kreis mit zentralem Punkt angedeutet. Entsprechend verläuft die Zufuhrrichtung Z parallel zur Normalen der Zeichenebene der Fig. 3a, 3b auf den Betrachter zu.

Die mindestens eine Profilbahn 30 läuft im Verbindungsbereich 16 kopfseitig in die Hauptprofilbahn 10 ein. Vorzugsweise geht ein Bahnverlauf der Profilbahn 30 tangential in die Hauptprofilbahn 10 über, um einen laufruhigen und störungsfreien Eintritt des Elements E aus der Profilbahn 30 in die Hauptprofilbahn 10 zu realisieren. Dabei deckt bevorzugt der Deckblock 90 die Profilbahn 30 in gleicher Weise ab, wie einen Teil der Hauptprofilban 10. Im Hinblick auf das oben beschriebene Einlaufen gilt das Gleiche analog auch für die unten näher erläuterte mindestens eine Profilbahn 70, die schaftseitig in die Hauptprofilbahn 10 einläuft (siehe Fig. 15).

In den Fig. 9 bis 14 sind die Schnitte gemäß den Linien 9-9, 10-10, 11-11, 12-12, 13-13 und 14-14 in Fig. 8 wiedergegeben. Sie illustrieren die Bewegung des Elements E in Zufuhrrichtung Z entlang der Hauptprofilbahn 10 und durch den Verbindungsbereich 16. Anhand von Fig. 9a ist zunächst zu erkennen, dass die Symmetrieachse S der Querschnitte der Profilbahn 30 und der Hauptprofilbahn 10 annähernd kollinear zueinander ausgerichtet sind. Eine gewisse Abweichung in der Kollinearität ist in Zufuhrrichtung Z vor dem Verbindungsbereich 16 durch eine Neigung α der Profilbahn 30 bedingt. Mit dem bevorzugten tangentialen Übergang der Profilbahn 30 in die Hauptprofilbahn 10 im Verbindungsbereich 16 wird die Kollinearität vollständig hergestellt. Lediglich gewisse Toleranzen im Formschluss zwischen der Profilbahn 30 und dem Element E erlauben noch eine Elementneigung, sodass auch hier von einer näherungsweisen Kollinearität auszugehen ist. Es versteht sich, dass neben der annähernden Kollinearität der Symmetrieachsen S auch die Querschnitte der Profilbahn 30 und der Profilbahn 10 gleich orientiert sein müssen.

Der oben genannte Neigungswinkel oder Einfahrtswinkel α der Profilbahn 30 ist ausgewählt aus einem Bereich von 5 ° ≤ α ≤ 90 °. Unabhängig von der Größe des Winkels α läuft die Profilbahn 30 bevorzugt tangential oder in einem spitzen Winkel aus einem Bereich von 2 ° bis 45 °, bevorzugt 2 ° bis 20 ° und noch mehr bevorzugt 2 ° bis 10 °, in die Hauptprofilbahn 10 ein. Vorzugsweise hat der Neigungswinkel α einen Wert aus dem Bereich von 25 ° ≤α ≤ 60 °.

Wie man anhand der Schnittbilder der Figuren 9 bis 14 an aufeinanderfolgenden Positionen in der T-förmigen Hauptprofilbahn 10 erkennen kann, wird das Element E an mehreren Punkten im ersten Bereich B_{1,10} ,der auch Kopfbereich genannt wird, formschlüssig geführt. Auch wenn der erste Bereich B₁, ₁₀ durch teilweise geneigte Flächen gebildet wird, liegt auch hier ein T-förmiger Querschnitt der Hauptprofilbahn 10 vor.

Das Element E bewegt sich zunächst entlang eines Bahnbereichs i der umfänglich vollständig eingeschlossen ist. Während der Schaft des Elements E im zweiten Bereich B_{2, 10} aufgenommen ist, wirkt der Oberblock 34 als Deckel der Hauptprofilbahn 10. In diesem Bereich stützt sich das Element E, im Speziellen der Kopf des Stanzniets, in der Kopfführung der Hauptprofilbahn 10 an drei Punkten ab. Diese Punkte werden durch den Oberkörper 34 als Deckel und die Auflagebereiche A_{B}, ₁₀ gebildet. Sobald sich die Profilbahn 30 und die Hauptprofilbahn 10 im Verbindungsbereich 16 soweit annähern, dass der zweite Bereich B_{2,30} der Profilbahn 30 eine Verbindung zur Hauptprofilbahn 10 herstellt, wird die Deckelwirkung des Oberblocks 34 aufgehoben. Da aber der zweite Bereich B_{2,30} der sich der Hauptprofilbahn 10 tangential annähernden Profilbahn 30 senkrecht zur Zufuhrrichtung Z schmaler ausgebildet ist als der erste Bereich B₁. ₁₀ der Hauptprofilbahn 10, wird die Deckelwirkung des Oberblocks 34 auf einen Randabschnitt der Profilbahn 30 reduziert. Somit wird das Element E bei seiner Bewegung im Bahnbereich ii durch vier Anlagepunkte geführt, gestützt und daher lagestabil gehalten.

Der für die Kopfführung und auch allgemein für die Führung nicht T-förmiger Elemente, beispielsweise Scheiben, Muttern oder dgl., verantwortliche erste Bereich B₁ des Querschnitts der Hauptprofilbahn 10 und der Profilbahn 30; 70 weist die Höhe h₁ auf. Die Höhe h₁ hat bevorzugt einen Wert, der die Bedingung h₁ < b₁ erfüllt. Weiterhin bevorzugt gilt 1/8 b₁ ≤ h₁ ≤ 2/3 b₁.

Da die Breite b₁ unter Einbeziehung eines Toleranzbereichs dem Kopfdurchmesser oder Außendurchmesser des Elements E entspricht, gewährleistet eine daran angepasste Höhe h₁ ein maximales Verkippen des Elements E zur Senkrechten S₁, wodurch keine Blokade der Profilbahn durch das Element E erzeugt wird. Dieses Verkippen entsteht bspw. durch die Druckluft, die das Element E innerhalb der Hauptprofilbahn 10 oder der Profilbahnen 30; 70 bewegt. Es wirkt sich aber nicht negativ auf den Transport des Elements E aus, da die Dimensionierung der Hauptprofilbahn 10 und der Profilbahnen 30; 70 ein Blockieren oder Verklemmen des Elements E verhindern.

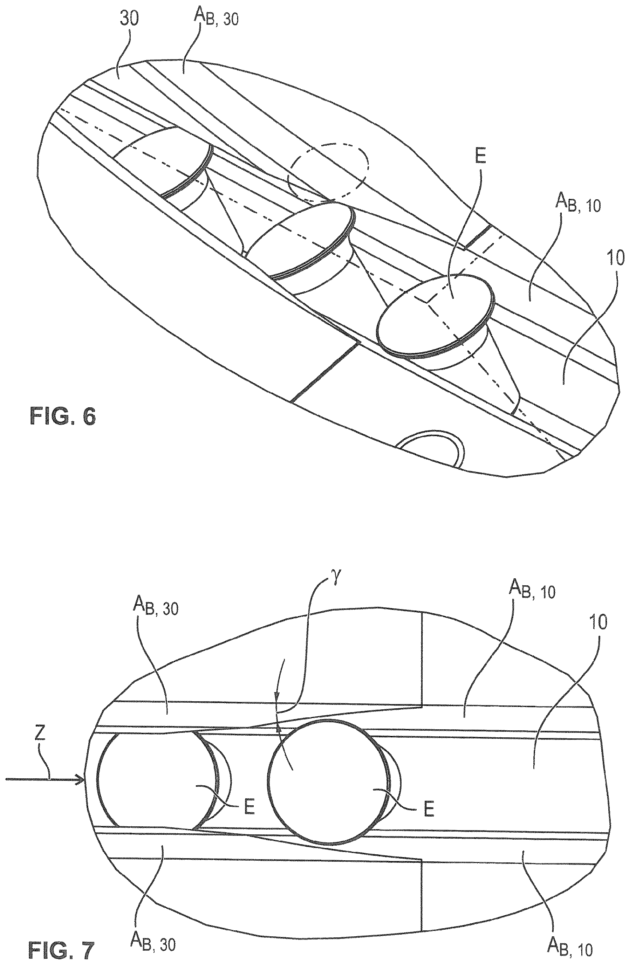

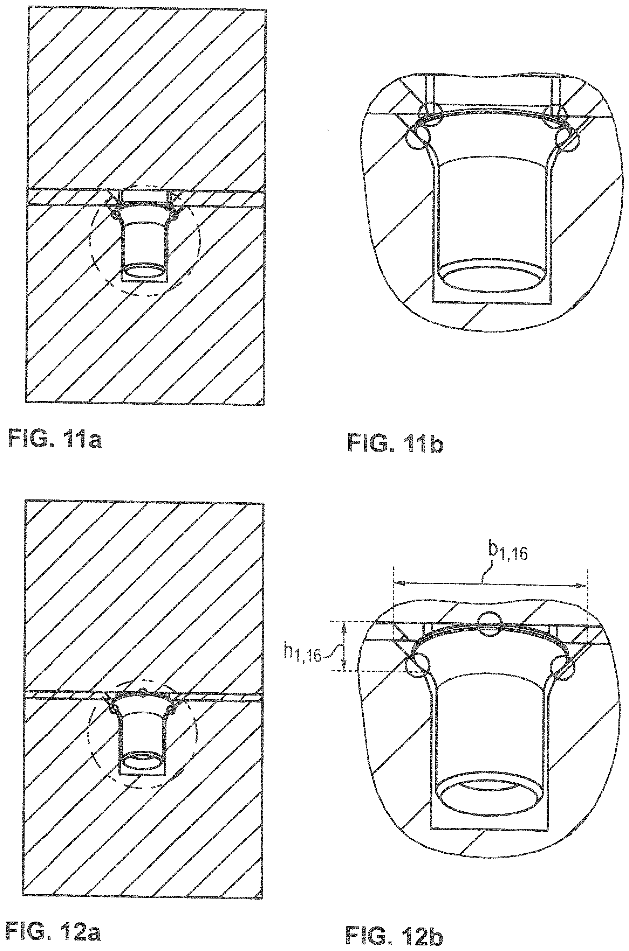

Mit dem tangentialen Übergang der Profilbahn 30 in die Hauptprofilbahn 10 gemäß den Fig. 11 und 12 wandern die zwei oberen Anlagepunkte am Kopf des Elements E senkrecht zur Zufuhrrichtung Z lateral nach außen. Sobald der zweite Bereich B_{2, 30} der Profilbahn 30 in den zweiten Bereich B_{2, 10} der Hauptprofilbahn 10 übergeht, geht die seitliche Abstützung an zwei Punkten der Kopfoberseite des Elements E verloren. Aus diesem Grund nimmt das Element E bevorzugt eine stärkere Neigung in Bezug auf die Senkrechte S zur Führungsrichtung Z ein, wie man im Vergleich der Fig. 11b und 12b erkennen kann. Die Neigung des Elements E wird begrenzt durch eine kopfseitige Abstützung des Elements E an der schaftabgewandten Seite des ersten Bereichs B_{1, 30} der Profilbahn 30. In dem Verbindungsbereich 16, in dem der erste Bereich B_{1, 30} der Profilbahn 30 in den ersten Bereich B_{1, 10} der Hauptprofilbahn 10 übergeht, hat der Kopf der Elements E die meiste Bewegungsfreiheit und somit Störanfälligkeit. Denn in diesem Verbindungsbereich 16 werden die lateralen Auflagebereiche A_{B, 30} und somit die Stützpunkte an der Kopfoberseite des Elements E lateral nach außen versetzt, bis sie ihre Wirkung verlieren (siehe Fig. 6 und 7). Um ein zu starkes Verkippen oder gar ein Verklemmen des Elements E in der Hauptprofilbahn 10 zu vermeiden, weist daher der Verbindungsbereich 16 in seinem Querschnitt einen ersten Bereich B_{1, 16} auf, dessen Höhe h_{1, 16} bevorzugt einen Wert hat, der die Bedingung h₁, ₁₆ < b_{1, 16} erfüllt. Weiterhin bevorzugt gilt 1/8 b_{1, 16} ≤ h_{1, 16} ≤ 2/3 b_{1, 16}.

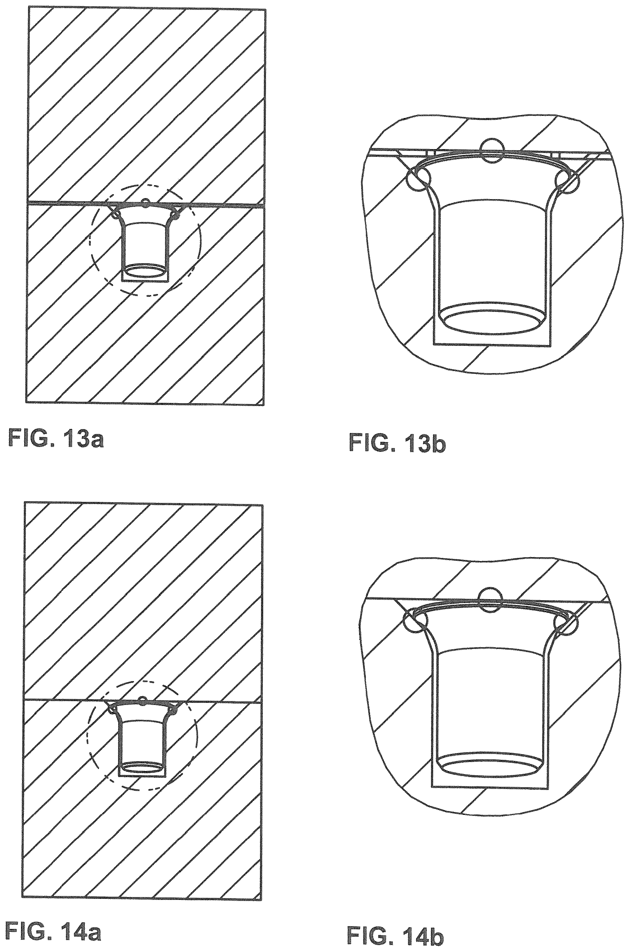

Mit der weiteren Bewegung des Elements E in Zufuhrrichtung Z verringert sich die Höhe h_{1, 16} des Verbindungsbereichs 16, bis sie der Höhe h₁, ₁₀ der Hauptprofilbahn 10 entspricht. Dabei verringert sich die Neigung des Elements E in Zufuhrrichtung Z weiter, während das Element E an drei Punkten gestützt wird (siehe Fig. 13 und 14).

Anhand von Fig. 7 ist erkennbar, dass bevorzugt die Auflagebereiche A_{B}, ₃₀ kontinuierlich lateral zurückweichen. Der dabei genutzte Auslaufwinkel γ ist in Bezug auf die Zufuhrrichtung Z aus einem Bereich von 5° ≤ γ ≤ 90 ° ausgewählt. Vorzugsweise wird ein Winkel aus dem Bereich 45 ° ≤ γ ≤ 70 ° genutzt. Es ist ebenfalls bevorzugt, einen Winkelbereich von 15 ° ≤ γ ≤ 40 ° zu nutzen, sofern ein für die Elementweiche 1 zur Verfügung stehender Bauraum dies gestattet.

Somit ist es auch bevorzugt, dass die Auflagebereiche A_{B, 30} stufenartig lateral zurückspringen. Weiterhin laufen die Auflagebereiche A_{B}, ₃₀ krummlinig lateral aus. Über das laterale Zurückweichen der Auflagebereiche A_{B, 30} wird vorzugsweise die Länge des Verbindungsbereichs 16 in Zufuhrrichtung Z eingestellt.

Während die Bewegung des Elements E entlang der Hauptprofilbahn 10 durch den Verbindungsbereich 16 beschrieben worden ist, findet eine analoge Bewegung des Elements E durch die mindestens eine Profilbahn 30 und den Verbindungsbereich 16 statt. Dabei wird das Element E vorzugsweise permanent an drei Punkten geführt, gestützt und in seiner Lage orientiert. Wenn der zweite Bereich B₂ der Profilbahn 30 sich durch die zurückweichenden Auflagebereiche A_{B, 30} (siehe Fig. 7) soweit verbreitet hat, dass das Element E seine Kopfführung in der Profilbahn 30 verliert, geht das Element E im Verbindungsbereich 16 in die Hauptprofilbahn 10 über. Ab diesem Moment, der in Fig. 12 dargestellt ist, verläuft die weitere Bewegung des Elements E analog zur Bewegung des Elements E in der Hauptprofilbahn, wie sie oben beschrieben worden ist.

Eine weitere bevorzugte Ausführungsform der Elementweiche 1 ist in den Fig. 15 bis 17 gezeigt. Hier läuft mindestens eine Profilbahn 70 von unten, also schaftseitig, in die Hauptprofilbahn 10 ein. Die Schnittdarstellungen in den Fig. 15 und 16 zeigen, dass die Profilbahn 70 im Bahnabschnitt iv zunächst eine Drei-Punkt-Führung für das Element E bereitstellt. Dies entspricht der Führung im Bahnabschnitt ii der Fig. 8. Sobald der zweite Bereich B_{2, 10} oder auch Schaftbereich der Hauptprofilbahn 10 sich mit der Profilbahn 70 verbindet, wird die Deckelwirkung der Basis 14 aufgehoben. Somit geht in diesem Bereich die Drei-Punkt-Führung des Elements E in die oben diskutierte Vier-Punkt-Führung über. Auch hier ist die Konstruktion analog zu der in Fig. 8 gezeigten Konstruktion aufgebaut. Entsprechend läuft vorzugsweise die mindestens eine Profilbahn 70 tangential in die Hauptprofilbahn 10 über den Winkel α ein.

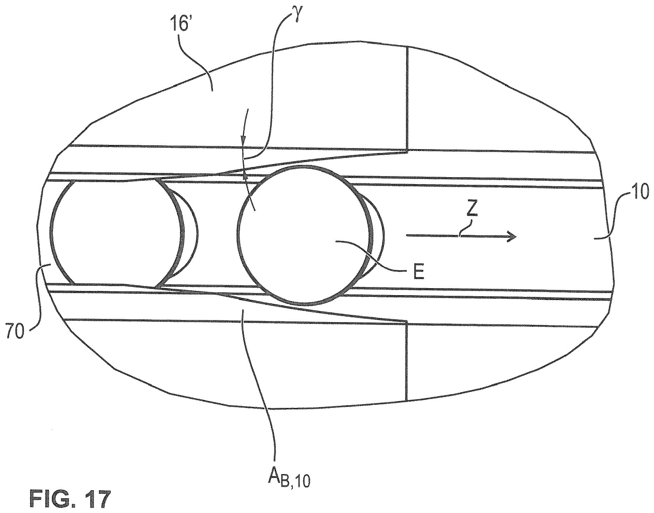

Bevor der erste Bereich B_{1, 70} der Profilbahn 70 in den ersten Bereich B_{1, 10} der Hauptprofilbahn 10 einläuft, springen die Auflagebereiche A_{B, 10} zurück, wie es in Fig. 17 angedeutet ist. Für die konstruktive Gestaltung des hier gezeigten Verbindungsbereichs 16' gilt das gleiche wie für den Verbindungsbereich 16 und dessen Besonderheiten (siehe Fig. 7). Sobald die Auflagebereiche A_{B, 10} das Element E aus der Vier-Punkt-Führung freigeben, geht diese in eine Drei-Punkt-Führung über. Auch hier gilt analog dass in Bezug auf die obige Verbindung der Hauptprofilbahn 10 und der Profilbahn 30 Gesagte.

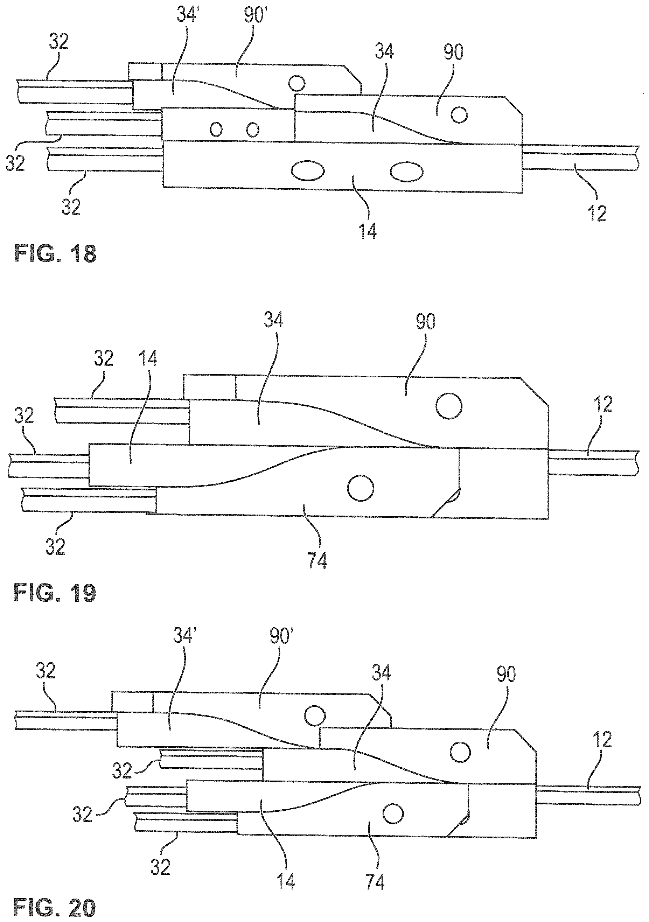

Wie man anhand der bevorzugten Ausführungsform der Fig. 18 bis 20 erkennen kann, lassen sich die oben beschriebenen Module mit Hauptprofilbahn 10 und/oder Profilbahn 30 und/oder Profilbahn 70 beliebig kaskadenartig kombinieren. Damit kann man über jede Zufuhrleitung 32 ein Element E anderer Konfiguration zuführen. Da die Zufuhr bevorzugt getaktet verläuft, kollidieren die Elemente E nicht innerhalb der Elementweiche 1. Zudem münden alle Zufuhrleitungen/-wege 32 in nur eine Hauptleitung 12, die mit einer Magaziniereinheit, einem Verbindungsgerät, einer Speichereinheit oder dergleichen verbunden ist.

Auf diese Weise kann auf beliebige Fügeaufgaben mit einem passenden Fügeelement reagiert werden, ohne mit einer schaltbaren Weiche jeweils Zufuhrwege anpassen zu müssen.

In dem hier beschriebenen Zufuhrverfahren erfolgt somit im Schritt SI ein Bereitstellen einer Mehrzahl unterschiedlicher Verbindungselemente E oder allgemein Elemente, die jeweils über eine Hauptprofilbahn 10 einem Verbindungsgerät, insbesondere einem Setzgerät, zuführbar sind. Nachfolgend wird die Mehrzahl von Profilbahnen 30; 70 einschließlich mindestens eine Hauptprofilbahn 10 und mindestens eine Profilbahn 30; 70 mit einer nicht-wegvariablen Elementweiche 1 verbunden. Auf diese Weise ist im Schritt SII gewährleistet, dass die Mehrzahl unterschiedlicher Verbindungselemente E getaktet in der Hauptprofilbahn 10 zusammengeführt werden. In einem abschließenden Schritt SIII erfolgt ein getaktetes Zuführen der unterschiedlichen Verbindungselemente E oder Elemente über die nicht-wegvariable Elementweiche 1 zum Verbindungsgerät derart, dass mindestens ein Verbindungselement über eine Profilbahn kopfseitig oder schaftseitig in die Hauptprofilbahn gelangt.

Zur Herstellung der nicht-wegvariablen Elementweiche 1 wird in einem ersten Schritt I eine Hauptprofilbahn 10 bereitgestellt. Innerhalb dieser Hauptprofilbahn 10 sind die Elemente E formschlüssig führbar, vorzugsweise kopfgeführt. In einem zweiten Schritt II wird mindestens eine Profilbahn 30; 70 bereitgestellt. Auch in dieser Profilbahn 30; 70 ist das Element E formschlüssig führbar, vorzugsweise kopfgeführt. In einem dritten Schritt III wird die Hauptprofilbahn 10 mit der mindestens einen Profilbahn in einem Verbindungsbereich 16; 16' verbunden. Die Hauptprofilbahn weist einen T-förmigen Querschnitt mit einer Kopfseite und einer Schaftseite auf. Des Weiteren mündet die mindestens eine Profilbahn 30; 70 kopfseitig oder schaftseitig in die Hauptprofilbahn.

### Bezugszeichenliste

- 1: Elementweiche
- 10: Hauptprofilbahn
- 12: Profilschlauch
- 14: Basis
- 16: Verbindungsbereich
- 30: Profilbahn
- 32: Profilschlauch
- 34: Oberblock
- 50: Befestigungsbereich
- 70: Profilbahn
- 74: Unterblock
- 90: Deckblock
- E: Element
- F: Fügegerät
- Q1, Q2: Quelle für Elemente
- Z: Zufuhrrichtung
- B₁: erster Bereich
- S: Senkrechte zur Zufuhrrichtung
- SP: Schwerpunkt
- A_{B}: Auflagebereich
- h: Höhe
- b: Breite
- I: Eingangsbereich
- II: Ausgangsbereich α-Neigung

## Patentansprüche

1. Eine nicht-wegvariable Elementweiche (1), insbesondere für Verbindungselemente, die kontinuierlich durch darin formschlüssig geführte, insbesondere kopfgeführte, Elemente (E) nur in einer Zufuhrrichtung (Z) von einer Mehrzahl von Profilbahnen (10, 30) in eine im Vergleich zur Mehrzahl reduzierte Anzahl von Profilbahnen (10, 30) passierbar ist, wobei die Elementweiche (1) eine Hauptprofilbahn (10) mit mindestens einer ersten Profilbahn (30) fest verbindet, und in der ein zu transportierendes Element (E) in einer Profilbahn (10, 30) durch Formschluss zwischen Element (E) und Profilbahn (10, 30) lageorientiert führbar ist, in der die Hauptprofilbahn (10) einen T-förmigen Querschnitt mit einer Kopfseite und einer Schaftseite aufweist und die mindestens eine erste Profilbahn (30) in einem Verbindungsbereich (16) kopfseitig oder schaftseitig in die Hauptprofilbahn (10) mündet.

2. Elementweiche (1) gemäß Anspruch 1, in der die mindestens eine erste Profilbahn (30) im Querschnitt T-förmig ist und einen Kopfbereich und einen Schaftbereich aufweist und die Profilbahn (30) im Verbindungsbereich (16) mit dem Schaftbereich in die Hauptprofilbahn (10) kopfseitig einläuft.

3. Elementweiche (1) gemäß Anspruch 2, in der der Kopfbereich der mindestens einen ersten Profilbahn (30) eine in Bezug auf die Zufuhrrichtung laterale Kopfauflage für ein zu transportierendes Element (E) bereitstellt, die im Verbindungsbereich (16) lateral zurückspringt.

4. Elementweiche (1) gemäß Anspruch 1, in der die mindestens eine erste Profilbahn (30) im Querschnitt T-förmig ist und einen Kopfbereich und einen Schaftbereich aufweist und die Profilbahn (30) im Verbindungsbereich (16) mit dem Kopfbereich in die Hauptprofilbahn schaftseitig einläuft.

5. Elementweiche (1) gemäß Anspruch 4, in der die Hauptprofilbahn (10) kopfseitig eine in Bezug auf die Zufuhrrichtung laterale Kopfauflage bereitstellt, die im Verbindungsbereich (16) lateral zumindest für einen Bauabschnitt zurückspringt, wenn die Profilbahn (30) schaftseitig in die Hauptprofilbahn (10) mündet.

6. Elementweiche (1) gemäß einem der vorhergehenden Ansprüche, in der die Hauptprofilbahn (10) und die mindestens eine erste Profilbahn (30) angrenzend an einen Kopfbereich geschlossen ausgebildet sind, wobei lediglich in einem Verbindungsbereich (16) der Kopfbereich der Hauptprofilbahn (10) oder der Profilbahn (30) offen ist.

7. Elementweiche (1) gemäß einem der vorhergehenden Ansprüche, die mit einer Druckluftquelle verbunden ist, sodass Elemente (E) mittels Druckluft durch die Elementweiche (1) bewegbar sind.

8. Elementweiche (1) gemäß einem der vorhergehenden Ansprüche, die eine Stapelkonstruktion aus einer Hauptprofilbahn (10) und mehreren Profilbahnen (30) darstellt.

9. Zufuhrverfahren für formschlüssig geführte, insbesondere kopfgeführte, Verbindungselemente, das die folgenden Schritte aufweist:
a. Bereitstellen einer Mehrzahl unterschiedlicher Verbindungselemente, die jeweils über eine Hauptprofilbahn (10) einem Verbindungsgerät, insbesondere ein Setzgerät, zuführbar sind,
b. Verbinden der Mehrzahl von Profilbahnen (10, 30) mit einer nicht-wegvariablen Elementweiche (1) gemäß einem der vorhergehenden Ansprüche, sodass die Mehrzahl unterschiedlicher Verbindungselemente in der Hauptprofilbahn (10) zusammen geführt werden, und
c. getaktetes Zuführen der unterschiedlichen Verbindungselemente über die nicht-wegvariable Elementweiche (1) zum Verbindungsgerät derart, dass mindestens ein Verbindungselement über eine Profilbahn (30) kopfseitig oder schaftseitig in die Hauptprofilbahn (10) gelangt.

10. Herstellungsverfahren für eine nicht-wegvariable Elementweiche gemäß einem der Ansprüche 1 bis 8, das die folgenden Schritte aufweist:
a. Bereitstellen einer Hauptprofilbahn (10), in der ein Element (E) formschlüssig führbar ist, vorzugsweise kopfgeführt,
b. Bereitstellen mindestens einer Profilbahn (30), in der das Element (E) formschlüssig führbar ist, vorzugsweise kopfgeführt,
c. fest Verbinden der Hauptprofilbahn (10) mit der mindestens einen Profilbahn (30) in einem Verbindungsbereich (16), wobei die Hauptprofilbahn (10) einen T-förmigen Querschnitt mit einer Kopfseite und einer Schaftseite aufweist und die mindestens eine Profilbahn (30) kopfseitig oder schaftseitig in die Hauptprofilbahn mündet.

11. Herstellungsverfahren gemäß Anspruch 10, in dem eine in Bezug auf eine Zufuhrrichtung (Z) vorhandene laterale Kopfauflage der Hauptprofilbahn (10) lateral zurückgesetzt wird, wenn eine Profilbahn (30) schaftseitig mit der Hauptprofilbahn (10) verbunden wird.

12. Herstellungsverfahren gemäß Anspruch 10, in dem eine in Bezug auf eine Zufuhrrichtung (Z) vorhandene laterale Kopfauflage der Profilbahn (30) lateral zurückgesetzt wird, wenn die Profilbahn (30) kopfseitig mit der Hauptprofilbahn (10) verbunden wird.

13. System bestehend aus einem Verarbeitungsgerät für Elemente (E), insbesondere einem Setzgerät, in Verbindung mit einer Mehrzahl von Zufuhrquellen (Q1, Q2) für unterschiedliche Elemente (E), vorzugsweise Verbindungselemente, wobei das System eine nicht-wegvariable Elementweiche (1) gemäß einem der Ansprüche 1 bis 8 umfasst und die Elemente (E) der Zufuhrquellen (Q1, Q2) über mindestens eine Profilbahn (30) und eine Hauptprofilbahn (10) dem Verarbeitungsgerät mit Hilfe der nicht-wegvariablen Elementweiche (1) zuführbar sind.

## Claims

1. A non-path-variable element switch (1), in particular for connection elements, which is continuously passable by elements (E) being positive-lockingly guided, in particular head-guided, therein only in a feeding direction (Z) from a plurality of profiled tracks (10, 30) into a number of profiled tracks, which is reduced compared to the plurality, wherein the element switch (1) fixedly connects a main profiled track (10) to at least one first profiled track (30), and in which an element (E) to be transported is guidable in a position-oriented manner in a profiled track (10, 30) by positive-locking between element (E) and profiled track (10, 30) in which the main profiled track (10) comprises a T-shaped cross-section with a head side and a shaft side and in a connection portion (16), the at least one first profiled track (30) opens into the main profiled track on the head side or shaft side.

2. Element switch (1) according to claim 1, in which the at least one first profiled track (30) is T-shaped in the cross-section and includes a head portion and a shaft portion and in the connection portion (16), the profiled track (30) enters with the shaft portion into the main profiled track (10) on the head side.

3. Element switch (1) according to claim 2, in which the head portion of the at least one first profiled track (30) provides a head bearing being lateral with respect to the feeding direction for an element (E) to be transported, which springs back laterally in the connection portion (16).

4. Element switch (1) according to claim 1, in which the at least one first profiled track (30) is T-shaped in the cross-section and includes a head portion and the shaft portion and in the connection portion (16), the profiled track (30) enters with the head portion into the main profiled track (10) on the shaft side.

5. Element switch (1) according to claim 4, in which the main profiled track (10) provides a head bearing being lateral with respect to the feeding direction which springs back laterally for at least one structure section in the connection portion (16) when the profiled track (30) opens into the main profiled track (10) on the shaft side.

6. Element switch (1) according to one of the preceding claims, in which the main profiled track (10) and the at least one first profiled track (30) are formed closed adjacent to a head portion, wherein the head portion of the main profiled track (10) or of the profiled track (30) is open in a connection portion (16), only.

7. Element switch (1) according to one of the preceding claims, which is connected to a source of compressed air, so that elements (E) are movable through the element switch (1) by means of compressed air.

8. Element switch (1) according to one of the preceding claims, which represents a stacked construction consisting of a main profiled track (10) and several profiled tracks (30).

9. Feeding method for positive-lockingly guided, in particular head-guided, connection elements, which includes the following steps:
a. providing a plurality of different connection elements which are each feedable via a main profiled track (10) to a connecting device, in particular a setting device,
b. connecting the plurality of profiled tracks (10, 30) with a non-path-variable element switch (1) according to one of the preceding claims, so that the plurality of different connection elements are brought together in the main profiled track (10), and
c. clocked feeding of the different connection elements via the non-path-variable element switch (1) to the connecting device in such a way that at least one connection element gets on the head side or shaft side into the main profiled track (10) via a profiled track (30).

10. Manufacturing method for a non-path-variable element switch (1) according to one of the claims 1 to 8, comprising the following steps:
a. providing a main profiled track (10) in which an element (E) is positive-lockingly guidable, preferably head-guided,
b. providing at least one profiled track (30) in which the element (E) is positively guidable, preferably head-guided,
c. firmly connecting the main profiled track (10) with the at least one profiled track (30) in a connection portion (16), wherein the main profiled track (10) includes a T-shaped cross-section with a head side and a shaft side and the at least one profiled track (30) opens into the main profiled track on the head side or shaft side.

11. Manufacturing method according to claim 10, in which a lateral head bearing of the main profiled track (10) which is present with respect to a feeding direction (Z) is set back laterally when a profiled track (30) is connected to the main profiled track (10) on the shaft side.

12. Manufacturing method according to claim 10, in which a lateral head bearing of the profiled track (30) which is present with respect to a feeding direction (Z) is set back laterally when the profiled track (30) is connected with the main profiled track (10) on the head side.

13. System consisting of a processing device for elements (E), in particular of a setting device, in connection with a plurality of feeding sources (Q1, Q2) for different elements (E), preferably connection elements, wherein the system includes a non-path-variable element switch (1) according to one of the claims 1 to 8 and the elements (E) of the feeding sources (Q1, Q2) are feedable to the processing device via at least one profiled track (30) and a main profiled track (10) with the help of the non-path-variable element switch (1).

## Revendications

1. Dispositif d'aiguillage d'éléments à course constante (1), en particulier pour des éléments d'assemblage, lequel peut être traversé en continu par des éléments (E) guidés dans celui-ci par complémentarité de forme, en particulier par la tête, uniquement dans une direction d'alimentation (Z) à partir d'une pluralité de pistes profilées (10, 30) vers un nombre de pistes profilées (10, 30) réduit par rapport à la pluralité, dans lequel le dispositif d'aiguillage d'éléments (1) relie fixement un piste profilée principale (10) à au moins une première piste profilée (30), et dans lequel un élément à transporter (E) peut être guidé dans une position orientée dans une piste profilée (10, 30) par complémentarité de forme entre l'élément (E) et la piste profilée (10, 30), dans lequel la piste profilée principale (10) présente une section transversale en forme de T avec un côté tête et un côté tige et l'au moins une première piste profilée (30) débouche côté tête ou côté tige sur la piste profilée principale (10) dans une région d'assemblage (16).

2. Dispositif d'aiguillage d'éléments (1) selon la revendication 1, dans lequel l'au moins une première piste profilée (30) présente une section transversale en forme de T ainsi qu'une région de tête et une région de tige, et la piste profilée (30) arrive avec la région de tige côté tête dans la piste profilée principale (10) dans la région d'assemblage (16).

3. Dispositif d'aiguillage d'éléments (1) selon la revendication 2, dans lequel la région de tête de l'au moins une première piste profilée (30) fournit un appui de tête latéral par rapport à la direction d'alimentation, lequel est en retrait latéralement dans la région d'assemblage (16), pour un élément à transporter (E).

4. Dispositif d'aiguillage d'éléments (1) selon la revendication 1, dans lequel l'au moins une première piste profilée (30) présente une section transversale en forme de T ainsi qu'une région de tête et une région de tige, et la piste profilée (30) arrive avec la région de tête côté tige dans la piste profilée principale dans la région d'assemblage (16).

5. Dispositif d'aiguillage d'éléments (1) selon la revendication 4, dans lequel la piste profilée principale (10) fournit côté tête un appui de tête latéral par rapport à la direction d'alimentation, lequel est en retrait latéralement, au moins pour une section de construction dans la région d'assemblage (16), lorsque la piste profilée (30) débouche côté tige sur la piste profilée principale (10).

6. Dispositif d'aiguillage d'éléments (1) selon l'une des revendications précédentes, dans lequel la piste profilée principale (10) et l'au moins une première piste profilée (30) sont conçues fermées à côté d'une région de tête, dans lequel la région de tête de la piste profilée principale (10) ou de la piste profilée (30) est ouverte seulement dans une région d'assemblage (16).

7. Dispositif d'aiguillage d'éléments (1) selon l'une des revendications précédentes, lequel est relié à une source d'air comprimé, de telle façon que des éléments (E) peuvent être déplacés à travers le dispositif d'aiguillage d'éléments (1) à l'aide d'air comprimé.

8. Dispositif d'aiguillage d'éléments (1) selon l'une des revendications précédentes, lequel représente une construction empilée constituée d'une piste profilée principale (10) et de plusieurs pistes profilées (30).

9. Procédé d'alimentation en éléments d'assemblage guidés par complémentarité de forme, en particulier par la tête, présentant les étapes suivantes :
a. mise à disposition d'une pluralité d'éléments d'assemblage différents, lesquels peuvent être alimentés respectivement vers un appareil d'assemblage, en particulier un appareil de scellement, par le biais d'une piste profilée principale (10),
b. assemblage de la pluralité de pistes profilées (10, 30) avec un dispositif d'aiguillage d'éléments à course constante (1) selon l'une des revendications précédentes, de telle façon que la pluralité d'éléments d'assemblage différents sont guidés ensemble dans la piste profilée principale (10), et
c. alimentation cadencée des différents éléments d'assemblage vers l'appareil d'assemblage par le biais du dispositif d'aiguillage d'éléments à course constante (1), de telle façon qu'au moins un élément d'assemblage parvient côté tête ou côté tige dans la piste profilée principale (10) par le biais d'une piste profilée (30).

10. Méthode de fabrication pour un dispositif d'aiguillage d'éléments à course constante selon l'une des revendications 1 à 8, présentant les étapes suivantes :
a. mise à disposition d'une piste profilée principale (10) dans laquelle un élément (E) peut être guidé par complémentarité de forme, de préférence par la tête,
b. mise à disposition d'au moins une piste profilée (30), dans laquelle l'élément (E) peut être guidé par complémentarité de forme, de préférence par la tête,
c. assemblage fixe de la piste profilée principale (10) avec l'au moins une piste profilée (30) dans une région d'assemblage (16), la piste profilée principale (10) présentant une section transversale en forme de T avec un côté tête et un côté tige, et l'au moins une piste profilée (30) débouchant côté tête ou côté tige sur la piste profilée principale.

11. Méthode de fabrication selon la revendication 10, dans lequel un appui de tête de la piste profilée principale (10), latéral par rapport à une direction d'alimentation (Z), est placé en retrait latéralement lorsqu'une piste profilée (30) est assemblée côté tige avec la piste profilée principale (10).

12. Méthode de fabrication selon la revendication 10, dans lequel un appui de tête de la piste profilée (30), latéral par rapport à une direction d'alimentation (Z), est placé en retrait latéralement lorsque la piste profilée (30) est assemblée côté tête avec la piste profilée principale (10).

13. Système comprenant un appareil de traitement pour des éléments (E), en particulier un appareil de scellement, en association avec une pluralité de sources d'alimentation (Q1, Q2) pour différents éléments (E), de préférence des éléments d'assemblage, dans lequel le système comporte un dispositif d'aiguillage d'éléments à course constante (1) selon l'une des revendications 1 à 8, et les éléments (E) peuvent être alimentés à partir des sources d'alimentation (Q1, Q2) vers l'appareil de traitement par le biais d'au moins une piste profilée (30) et d'une piste profilée principale (10) à l'aide du dispositif d'aiguillage d'éléments à course constante (1).
